Europäisches Patentamt

European Patent Office

Office européen des brevets

(11) Publication number: **0 425 674 A1**

## EUROPEAN PATENT APPLICATION
## published in accordance with Art. 158(3) EPC

㉑ Application number: 89910926.8

㉒ Date of filing: 29.09.89

⑯ International application number:
PCT/JP89/01004

㉘ International publication number:
WO 90/04493 (03.05.90 90/10)

㉛ Int. Cl.⁵: **G05B 19/405**

㉚ Priority: 17.10.88 JP 261000/88

㊸ Date of publication of application:
08.05.91 Bulletin 91/19

㉞ Designated Contracting States:
**DE FR GB**

㉑ Applicant: **FANUC LTD.**
**3580, Shibokusa Aza-Komanba, Oshino-mura**
**Minamitsuru-gun, Yamanashi 401-05(JP)**

㉒ Inventor: **ENDO, Takahiko,FANUC Dai-3**
**Vira-karamatsu**
**3527-1, Shibokusa, Oshinomura**
**Minamitsuru-gun, Yamanashi 401-05(JP)**

㉔ Representative: **Brunner, Michael John et al**
**GILL JENNINGS & EVERY 53-64 Chancery**
**Lane**
**London WC2A 1HN(GB)**

㉠ **AUTOMATIC TOOL SELECTING SYSTEM.**

㉗ This invention relates to an automatic tool selecting system used in a machining program preparing step in an interactive numerical control apparatus or an interactive automatic program preparing apparatus. Tools are read out from a tool file (4) corresponding to an inputted shape to which a material is to be machined, and the cutting conditions from the inputted data (3) on the nature of the material and a cutting condition file (5) of a tool. The machining time of each tool is calculated by an automatic tool selecting means (6), and a tool having the shortest machining time is selected, a machining program (7) being then prepared.

Fig. 1

# AUTOMATIC TOOL SELECTION SYSTEM

## TECHNICAL FIELD

The present invention relates to an automatic tool selection system in a machining program creation process for an interactive numerical control apparatus and the like, and more specifically, to an automatic tool selection system by which a tool providing a minimum machining time is automatically selected.

## BACKGROUND ART

In interactive numerical control apparatuses or interactive automatic program creation apparatuses, tools corresponding to each tool configuration are preregistered in a tool list, and a programmer creates a machining program by inputting a machining configuration and selecting a most suitable tool from the tool list.

However, a considerable amount of experience is needed to determine what type of a tool is most suitable, and even an experienced programmer cannot easily determine the correct type when the number of tools listed in the tool lists is increased.

Although one of the criteria of tool selection is to select a tool by which machining can be carried out in a minimum time, it takes considerable time to calculate and determine a machining time for each tool.

## DISCLOSURE OF THE INVENTION

Taking the above into consideration, an object of the present invention is to provide an automatic tool selection system for selecting a tool by which machining is carried out in a minimum time.

To solve the above problem, according to the present invention, there is provided an automatic tool selection system in a machining program creation process of an interactive numerical control apparatus or an interactive automatic program creation apparatus, which comprises the steps of reading tools from a tool file corresponding to an input machining configuration, reading input raw material data and cutting conditions stored in the cutting condition file of the tools, calculating a machining time of each of the tools based on the cutting conditions of the tools, and selecting a tool providing a minimum machining time.

The tools in the tool file are determined by inputting a machining configuration and the machining time of each of the tools is calculated by the numerical control apparatus, whereby a tool providing the minimum machining time is determined.

## BRIEF DESCRIPTION OF THE DRAWINGS

Figure 1 is a conceptual diagram of an automatic tool selection system according to the present invention;
Figure 2 is a flowchart of processes effected by an automatic tool selection means; and
Figure 3 is a schematic diagram of the hardware arrangement of an interactive numerical control apparatus for embodying the present invention.

## BEST MODE OF CARRYING OUT THE INVENTION

An embodiment of the present invention will be described below with reference to drawings.

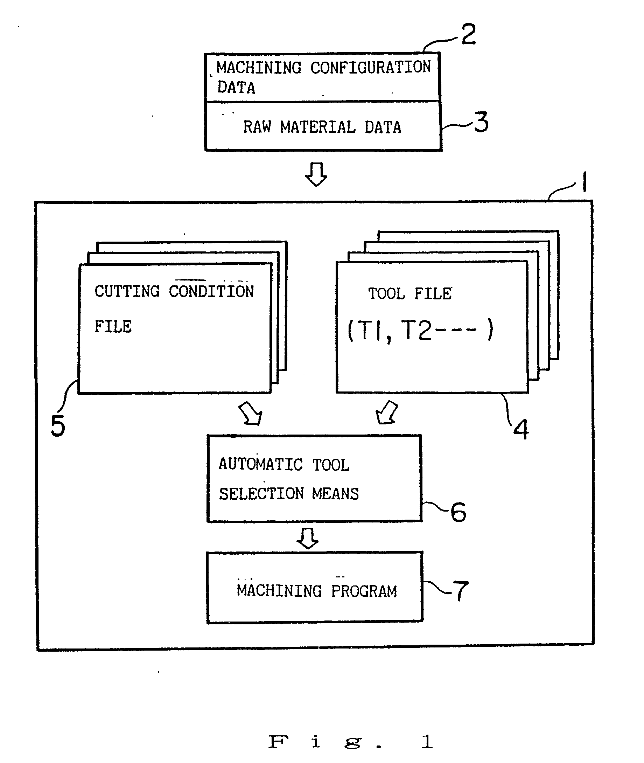

Figure 1 shows a conceptual diagram of an automatic tool selection system according to the present invention, wherein 1 designates an interactive numerical control apparatus to which a programmer inputs data such as machining configuration data 2, raw material data 3 and the like, in an interactive mode.

When the machining configuration data 2 is input, a tool file 4 for each machining process corresponding to the machining configuration is preregistered. Usually a plurality of tools are registered in the tool file 4 for a single machining process. For example, when a machining configuration is a groove, grooving tools are registered for a grooving process.

An automatic tool selection means 6 reads the cutting conditions of all of the tools T1, T2 and the like registered in the tool file 4, from the cutting condition file 5 of these tools, selects a tool by which machining can be carried out in a minimum time, and finally, inputs the selected tool to a machining program 7.

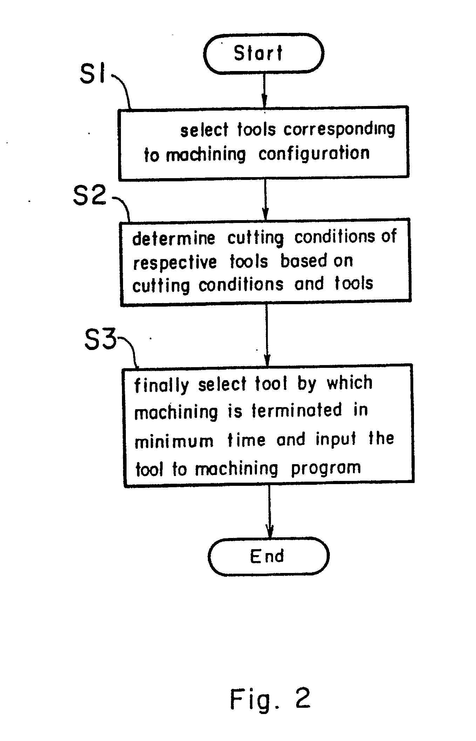

Figure 2 shows a flowchart of the processes effected by the automatic tool selection means, wherein numerals prefixed with an "S" indicate the numbers of steps of the processes.

Tools corresponding to a tool configuration are selected from a tool file at step S1, the cutting conditions of the respective tools are determined based on a cutting condition file and the tools at step S2, the machining times of the respective tools are calculated based on the cutting conditions, and a tool by which a machining time is minimized is selected and input to a machining program.

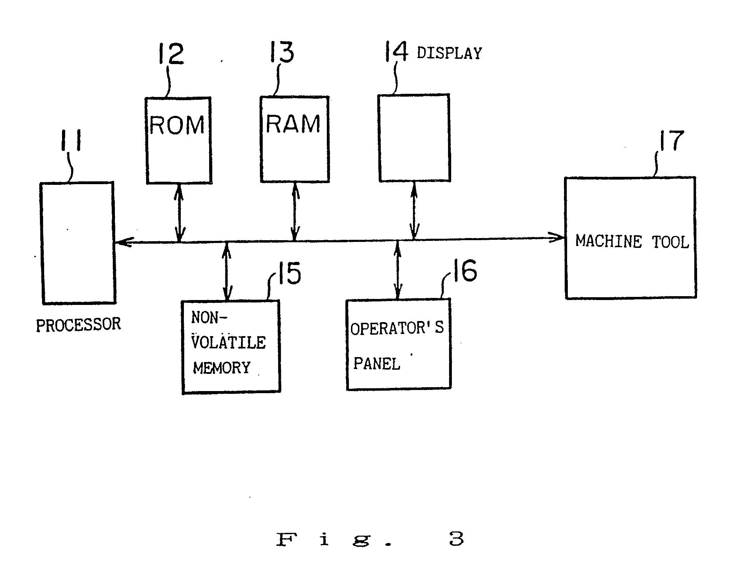

Figure 3 shows a schematic diagram of the hardware arrangement of an interactive numerical control apparatus embodying the present invention, wherein 11 designates a processor for controlling the numerical control apparatus as a whole, 12 designates a ROM in which a system program is stored, 13 designates a RAM in which various data is stored, 14 designates a display such as a CRT or the like, 15 designates a nonvolatile memory in which machining programs, parameters and pitch error correction amounts are stored, 16 designates an operator's panel, and 17 designates a machine tool.

Although the description of the above embodiment is based on an interactive numerical control apparatus is described above, this invention is also applicable to an interactive automatic program creation apparatus.

As described above, according to the present invention, since machining times of tools of a tool file corresponding to a machining configuration are calculated and a tool having a minimum machining time is selected, tool selection operation is simplified and thus a machining program can be created in a shorter time.

## Claims

1. An automatic tool selection system in a machining program creation process of an interactive numerical control apparatus or an interactive automatic program creation apparatus, comprising the steps of:

   reading tools from a tool file corresponding to an input machining configuration;

   reading input raw material data and cutting conditions stored in a cutting condition file of said tools, and calculating a machining time of each of said tools; and

   selecting a tool having a minimum machining time.

F i g . 1

S1

Start

select tools corresponding
to machining configuration

S2

determine cutting conditions of
respective tools based on
cutting conditions and tools

S3

finally select tool by which
machining is terminated in
minimum time and input the
tool to machining program

End

Fig. 2

F i g .  3

# INTERNATIONAL SEARCH REPORT

International Application No    PCT/JP89/01004

**I. CLASSIFICATION OF SUBJECT MATTER** (if several classification symbols apply, indicate all)

According to International Patent Classification (IPC) or to both National Classification and IPC

Int. Cl$^4$    B23Q15/00, G05B19/18

**II. FIELDS SEARCHED**

| Minimum Documentation Searched [7] | |
|---|---|
| Classification System | Classification Symbols |
| IPC | B23Q15/00, G05B19/18 |

Documentation Searched other than Minimum Documentation
to the Extent that such Documents are Included in the Fields Searched [8]

| | |
|---|---|
| Jitsuyo Shinan Koho | 1975 – 1989 |
| Kokai Jitsuyo Shinan Koho | 1975 – 1989 |

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| P | JP, A, 64-45545 (Toyoda Machine Works, Ltd.) 20 February 1989 (20. 02. 89) (Family: none) | 1 |
| A | JP, A, 62-181855 (Mitsubishi Heavy Industries, Ltd.) 10 August 1987 (10. 08. 87) (Family: none) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 19, 1989 (19. 12. 89) | January 8, 1990 (08. 01. 90) |
| International Searching Authority | Signature of Authorized Officer |
| Japanese Patent Office | |

Form PCT ISA 210 (second sheet) (January 1985)